# Europäisches Patentamt
# European Patent Office
# Office européen des brevets

(11) Veröffentlichungsnummer : **0 406 604 B1**

(12)
# EUROPÄISCHE PATENTSCHRIFT

(45) Veröffentlichungstag der Patentschrift :
**02.06.93 Patentblatt 93/22**

(51) Int. Cl.$^5$ : **C09D 175/04, C08G 18/10, C08G 18/76, C08G 18/30, C08G 18/66, C08G 18/80**

(21) Anmeldenummer : **90111393.6**

(22) Anmeldetag : **16.06.90**

(54) Verfahren zur Herstellung eines Beschichtungsmittels.

(30) Priorität : **01.07.89 DE 3921699**

(43) Veröffentlichungstag der Anmeldung :
**09.01.91 Patentblatt 91/02**

(45) Bekanntmachung des Hinweises auf die Patenterteilung :
**02.06.93 Patentblatt 93/22**

(84) Benannte Vertragsstaaten :
**AT BE CH DE ES FR GB IT LI NL**

(56) Entgegenhaltungen :
**EP-A- 0 010 248**
**EP-A- 0 275 908**
**US-A- 4 383 070**

(73) Patentinhaber : **BAYER AG**
**W-5090 Leverkusen 1 Bayerwerk (DE)**

(72) Erfinder : **Pedain, Josef, Dr.**
**Haferkamp 6**
**W-5000 Köln 80 (DE)**
Erfinder : **Schwindt, Jürgen, Dr.**
**Henry-T.v.Böttinger-Strasse 14**
**W-5090 Leverkusen 1 (DE)**
Erfinder : **Engbert, Theodor, Dr.**
**Avenida Washington Luiz 1527**
**Sao Paulo (BR)**
Erfinder : **Schönborn, Manfred**
**Am Scherfenbrand 71**
**W-5090 Leverkusen 1 (DE)**

**Beschreibung**

Die Erfindung betrifft ein Verfahren zur Herstellung eines neuen, unter dem Einfluß von Feuchtigkeit aushärtbaren, organische Polyisocyanate als Bindemittel enthaltenden Beschichtungsmittels.

Unter dem Einfluß von Feuchtigkeit aushärtbare Beschichtungsmittel, die als Bindemittel organische Polyisocyanate, insbesondere höhermolekulare NCO-Prepolymere, enthalten, sind seit langem bekannt (vgl. z.B. H. Kittel, Lehrbuch der Lacke und Beschichtungen, 1973, Verlag W.A. Colomb, Band 1, Teil 2, Seiten 573 - 576).

Wesentlich bezüglich der Qualität der aus solchen Beschichtungsmitteln erhaltenen Lackfilme und insbesondere bezüglich der Lagerstabilität des gebrauchsfertigen Beschichtungsmittels ist die Verwendung von trockenen Hilfs- und Zusatzmitteln wie beispielsweise Pigmenten, Füllstoffen und/oder Lösungsmitteln, so daß vor der Herstellung der Beschichtungsmittel eine einwandfreie Trocknung dieser Zusatzstoffe erfolgen muß. Für diese Trocknung haben sich hochreaktive, organische Isocyanate bewährt (DE-PS 1 245 590, DE-OS 2 539 728, DE-OS 3 204 128).

Die Verwendung von solchen hochreaktiven, niedermolekularen Isocyanatverbindungen, via insbesondere Tosylisocyanat, ist jedoch auch mit Nachteilen behaftet. Hierzu gehören der hohe Dampfdruck, die oftmals extrem hohe Reaktivität, die besondere Vorsichtsmaßnahmen erforderlich macht, und insbesondere der Umstand, daß die Isocyanate mit Wasser kristallisierende Folgeprodukte, beispielsweise Harnstoffe bilden, die in dem Lackansatz auskristallisieren, Trübungen bilden und dadurch zu Filmstörungen und schlechtem Verlauf führen können.

Es war daher die der Erfindung zugrunde liegende Aufgabe, neue Beschichtungsmittel auf Basis von Isocyanatgruppen aufweisenden Verbindungen zur Verfügung zu stellen, die auf die Mitverwendung der genannten hochreaktiven Isocyanate als Trocknungsmittel nicht angewiesen sind und dennoch in Abwesenheit von Feuchtigkeit eine ausgezeichnete Lagerstabilität aufweisen und zu hochwertigen Lackfilmen führen.

Diese Aufgabe konnte mit der Bereitstellung des nachstehen naher beschriebenen erfindungsgemäßen Verfahrens gelöst werden.

Gegenstand der Erfindung ist ein Verfahren zur Herstellung eines Beschichtungsmittels, welches ein unter dem Einfluß von Feuchtigkeit aushärtendes, aus organischen Polyisocyanaten bestehendes Bindemittel, sowie die aus der Lacktechnologie üblichen Hilfs- und Zusatzmittel enthält, dadurch gekennzeichnet, daß man zumindest die nicht völlig trockenen Hilfs- und Zusatzmittel zunächst mit einer Isocyanatkomponente a) vermischt, die eine mittlere NCO-Funktionalität von 1,05 bis 1,8 aufweist und ein Umsetzungsprodukt aus

a1) einem Polyisocyanatgemisch, welches, bezogen auf dieses Gemisch aus, 20 bis 70 Gew.-% 2,4'-Diisocyanatodiphenylmethan, 20 bis 70 Gew.-% 4,4'- und 2,2'-Diisocyanatodiphenylmethan, sowie 5 bis 30 Gew.-% höherkernigen Polyisocyanaten der Diphenylmethanreihe mit einer NCO-Funktionalität von > 2 besteht, und

a2) einer unterschüssigen Menge eines, gegebenenfalls Etherbrücken aufweisenden, einwertigen Alkanols mit 1 bis 26 Kohlenstoffatomen

darstellt, und das so erhaltene Gemisch nach Beendigung der spontan ablaufenden Isocyanat/Wasser-Reaktion mit einem Isocyanatgruppen aufweisenden Umsetzungsprodukt b) mit einem Isocyanatgehalt von 2,5 bis 25 Gew.-% aus

b1) einer Polyisocyanatkomponente, bestehend aus mindestens einem aromatischen Polyisocyanat mit einem NCO-Gehalt von 10 bis 50 Gew.-%, und

b2) einer unterschüssigen Menge einer Polyhydroxylkomponente, bestehend aus mindestens einem Ether- und/oder Ester- und/ oder Thioether- und /oder Carbonatgruppen aufweisenden Polyol des Molekulargewichtsbereichs 500 bis 10.000 und einer Hydroxylfunktionalität von 2 bis 6, gegebenenfalls in Abmischung mit bis zu 40 Gew.-%, bezogen auf das Gesamtgewicht der Komponente b2), mindestens eines 2- bis 6-wertigen Alkohols des Molekulargewichtsbereichs 62 bis 499,

sowie gegebenenfalls den restlichen Hilfs- und Zusatzmitteln vermischt, wobei die Mengen der Komponenten a) und b) einem Gewichtsverhältnis a):b) von 1:1 bis 1:30 entsprechen.

Die erfindungsgemäßen Verfahrensprodukte stellen auch gegenüber den Systemen der DE-OS 2 845 514 einen ganz wesentlichen Fortschritt dar. Gemäß der Lehre dieser Vorveröffentlichung, die sich mit Gemischen aus Mono- und Polyisocyanaten befaßt, müssen Wasser enthaltende Hilfs- und Zusatzmittel nach wie vor mit geeigneten Trocknungsmitteln, beispielsweise mit Tosylisocyanat getrocknet werden, wie dies beispielsweise aus Beispiel 3 hervorgeht. Irgendwelche Anregungen, wie auf die Mitverwendung derartiger Trocknungsmittel verzichtet werden konnte, sind der Vorveröffentlichung nicht zu entnehmen.

Die Komponente a) besteht aus einem Umsetzungsprodukt aus den Komponenten a1) und a2).

Bei der Komponente a1) handelt es sich um ein Polyisocanatgemisch der Diphenylmethanreihe der oben genannten Zusammensetzung. Vorzugsweise handelt es sich bei der Komponente a1) um ein Gemisch aus 20 bis 70, insbesondere 30 bis 50 Gew-% 2,4'-Diisocyanatodiphenylmethan, 20 - 70, insbesondere 40 bis 60 Gew-% 4,4'-Diisocyanatodiphenylmethan, 0 - 10, insbesondere 0 - 5 Gew.-% 2,2'-Diisocyanatodiphenylmethan und 5 - 30, insbesondere 5 - 15 Gew.-% höherfunktionellen Polyisocyanaten der Diphenylmethanreihe. Die mittlere NCO-Funktionalität der Komponente a1) liegt über 2 und bis zu 2,3, vorzugsweise bei 2,05 bis 2,25. Die Herstellung derartiger Gemische geschieht in an sich bekannter Weise durch Phosgenierung von Anilin/Formaldehyd-Kondensaten, wobei der vergleichsweise hohe Gehalt an 2,4'-Diisocyanatodiphenylmethan entweder durch geeignete Steuerung der Anilin/Formaldehyd-Kondensation oder durch Abdestillieren einer Diisocyanat-Fraktion mit erhöhtem Gehalt an 2,4'-Diisocyanatodiphenylmethan und Rückvermischung dieser Fraktion mit anderen Polyisocyanatgemischen der Diphenylmethanreihe sichergestellt werden kann.

Bei der Komponente a2) handelt es sich um einwertige, gegebenenfalls Etherbrücken aufweisende und gegebenenfalls olefinisch ungesättigte (Cyclo)Alkanole mit 1 bis 26, vorzugsweise 4 bis 14 und besonders bevorzugt 6 bis 12 Kohlenstoffatomen. Geeignet sind beispielsweise i-Propanol, Allylalkohol, i-Butanol, n-Dodecanol, n-Octadecanol, Ethoxyethanol, Propoxyethanol, Methoxypropanol, Butoxyethanol, Cyclohexanol und bevorzugt verzweigte Alkohole wie Neopentylalkohol, 2-Ethylhexanol und die isomeren Trimethylhexanole.

Zur Herstellung der Komponente a) werden die Ausgangskomponenten a1) und a2) unter Verwendung eines NCO-Überschusses miteinander umgesetzt, wobei die Menge der Komponente a2) so bemessen wird, daß das resultierende Umsetzungsprodukt a) eine mittlere NCO-Funktionalität von mindestens 1,05 und bis zu 1,8, vorzugsweise 1,2 bis 1,6 und besonders bevorzugt 1,3 bis 1,5 aufweisen. Die Umsetzung der Ausgangskomponenten a1) und a2) erfolgt in an sich bekannter Weise bei ca. 20 bis 100, vorzugsweise 30 bis 80°C, beispielsweise dergestalt, daß die Isocyanatkomponente a1) vorgelegt und die Alkoholkomponente a2) in die vorgelegte Isocyanatkomponente eingerührt wird.

Bei der Komponente b) handelt es sich um Umsetzungsprodukte aus den Ausgangskomponenten b1) und b2).

Bei der Komponente b1) handelt es sich um beliebige aromatische Polyisocyanate mit einem NCO-Gehalt von 10 bis 50, vorzugsweise 25 bis 48 Gew.-%. Vorzugsweise werden die bekannten Diisocyanate der Polyurethanchemie als Komponente b1) verwendet. Beispiele geeigneter Ausgangspolyisocyanate b1) sind 2,4- und 2,6-Diisocyanatotoluol, Gemische dieser Isomeren, 2,4'- und 4,4'-Diisocyanatodiphenylmethan, Gemische dieser Isomeren oder auch Gemische aus den genannten Diisocyanatotoluolen und Diisocyanatodiphenylmethanen. Geeignet sind auch Polyisocyanatgemische der Diphenylmethanreihe, beispielsweise solche der als Komponente a1) beispielhaft genannten Art oder auch solche, die einen vergleichsweise niedrigen Gehalt an 2,4'-Diisocyanatodiphenylmethan und einen entsprechend höheren Gehalt an 4,4'-Diisocyanatodiphenylmethan aufweisen.

Bei der Polyhydroxylkomponente b2) handelt es sich um Ether- und/oder Ester- und/oder Thioether- und/oder Carbonatgruppen-aufweisende Polyhydroxylverbindungen eines mittleren, aus der Funktionalität und dem Hydroxylgruppen-Gehalt berechenbaren Molekulargewichts von 500 bis 10.000, vorzugsweise 1.000 bis 4.000, und einer Hydroxylfunktionalität von 2 bis 6, vorzugsweise von 2 bis 4, oder um Gemische derartiger, höhermolekularer Polyhydroxylverbindungen mit niedermolekularen, mehrwertigen Alkoholen des Molekulargewichtsbereichs 62 bis 499, vorzugsweise 62 bis 200, die eine Hydroxylfunktionalität von 2 bis 6, vorzugsweise von 2 bis 4, aufweisen. Die niedermolekularen Alkohole können in einer Menge von bis zu 40 Gew.-%, bezogen auf das Gesamtgewicht der Komponente b2), eingesetzt werden.

Vorzugsweise besteht die Komponente b2) aus Polyetherpolyolen des genannten Molekulargewichtsbereichs und der genannten Hydroxylfunktionalität bzw. aus Kombinationen derartiger Polyetherpolyole mit niedermolekularen, mehr-mehrwertigen Alkoholen der genannten Art.

Die Herstellung von höhermolekularen Polyhydroxylverbindungen der genannten Art gehört zum längst bekannten freien Stand der Technik. Die bevorzugt eingesetzten Polyetherpolyole werden in an sich bekannter Weise durch Alkoxylierung von geeigneten Startermolekülen erhalten, wobei als Startermoleküle beispielsweise die nachstehend näher beschriebenen mehrwertigen Alkohole oder auch mindestens 2 NH-Bindungen aufweisende Amine wie beispielsweise Ethylendiamin, Hexamethylendiamin oder Anilin oder auch Aminoalkohole wie beispielsweise Ethanolamin, Diethanolamin, Propanolamin oder Dipropanolamin in Betracht kommen. Auch Gemische verschiedener Startermoleküle können verwendet werden. Zur Alkoxylierung werden vorzugsweise Propylenoxid und/oder Ethylenoxid, gegebenenfalls im Gemisch oder auch in beliebiger Reihenfolge verwendet.

Bei den niedermolekularen Alkoholen handelt es sich insbesondere um einfache Alkanpolyole wie Ethylenglykol, Propylenglykol, Trimethylenpropan, Glycerin, Pentaerythrit, Sorbit oder beliebige Gemische derartiger mehrwertiger Alkohole.

Die Herstellung der Komponente b) kann auf verschiedene Weise erfolgen. Beispielsweise kann ein als Komponente b1) geeignetes Polyisocyanat, beispielsweise 2,4-Diisocyanatotoluol mit einem höhermolekularen Alkohol der unter b2) beispielhaft genannten Art oder mit einem Gemisch aus einem derartigen höhermolekularen Alkohol mit mindestens einem niedermolekularen Polyol der beispielhaft genannten Art unter Einhaltung eines hohen NCO-Überschusses umgesetzt werden, worauf sich vorzugsweise eine destillative Entfernung von nicht umgesetztem Isocyanat-Überschuß anschließt. Ebenso gut möglich ist jedoch eine völlig äquivalente Arbeitsweise, bei welcher ein erster Teil eines Ausgangspolyisocyanats b1) mit einem höhermolekularen Polyol der beispielhaft genannten Art wie beschrieben umgesetzt wird, ein zweiter Teil eines Ausgangspolyisocyanats b1) separat mit einem niedermolekularen mehrwertigen Alkohol wie beschrieben umgesetzt wird, worauf die so erhaltenen Umsetzungsprodukte miteinander abgemischt werden. Hierbei können selbstverständlich unterschiedliche Ausgangspolyisocyanate b1) und auch beliebige Gemische von Polyhydroxylverbindungen der beispielhaft genannten Art verwendet werden. Die Art der Herstellung der Komponente b) ist somit nicht erfindungswesentlich, vorausgesetzt, die Komponente b) basiert im wesentlichen auf aromatischen Ausgangspolyisocyanaten b1) und höhermolekularen und gegebenenfalls zusätzlich niedermolekularen Polyhydroxylverbindungen der unter b2) beispielhaft genannten Art.

Im übrigen weist die Komponente b) vorzugsweise einen NCO-Gehalt von 2,5 bis 25, insbesondere 3 bis 20 Gew.-% auf.

Die erfindungsgemäß hergestellten Beschichtungsmittel weisen aus der Lacktechnologie bekannte Hilfs- und Zusatzmittel wie insbesondere Füllstoffe, Pigmente, Lösungsmitel, Katalysatoren, Verlaufhilfsmittel u. dgl. auf. Das wesentliche Prinzip des erfindungsgemäßen Verfahrens besteht nun darin, zumindest jene Hilfs- und Zusatzmittel, die nicht völlig trocken sind, zunächst mit der als Trocknungsmittel wirkenden Komponente a) zu vermischen und dieses Gemisch nach beendeter Trocknung, die am Ende der Kohlendioxidentwicklung erkannt werden kann, mit den übrigen Komponenten abzumischen. In der Praxis verfährt man hierbei dergestalt, daß man aus dem Wassergehalt, der in der Summe aller Zusatzstoffe und Hilfsmittel vorhanden ist, die Menge an Komponente a) errechnet, die einem Molverhältnis von Isocyanatgruppen der Komponente a) zu Wasser von 1,5:1 bis 30 : 1, vorzugsweise 2: 1 bis 15: 1, entspricht und diese berechnete Menge der Komponente a) vorab mit den wasserhaltigen Hilfs-und Zusatzmitteln und gegebenenfalls den trockenen Hilfs- und Zusatzmitteln abmischt. Durch Verwendung eines Überschusses der Komponente a) gegenüber dem aus dem Hilfs- und Zusatzmitteln zu entfernenden Wasser wird erreicht, daß freie Isocyanatgruppen der Komponente a) übrigbleiben, die zusammen mit der Komponente b) nach Herstellung des Lackfilms mit der Luftfeuchtigkeit abreagieren und einen einheitlichen Film ohne Störungen ausbilden. Im übrigen wirkt die Komponente a) oftmals als Tixotropiermittel für das gebrauchsfertige Beschichtungsmittel. Die Komponente a) stellt also gleich zeitig ein Trocknungs- und Stabilisierungsmittel, ein rheologisches Additiv und eine Bindemittelkomponente dar. Trockene Hilfs- und Zusatzmittel können somit zusammen mit den wasserhaltigen Hilfs- und Zusatzmitteln zu Beginn des Verfahrens oder auch erst am Ende zugesetzt werden. Um die Wasser/NCO-Reaktion bei der dann erfolgenden Trocknung zu beschleunigen, ist es vorteilhaft, die Temperatur des so erhaltenen Gemisches auf 20 bis 90°C, vorzugsweise 50 bis 80°C einzustellen und bis zur Beendigung der Kohlendioxidentwicklung aufrechtzuerhalten. Im Anschluß hieran erfolgt dann die Zugabe der restlichen Bestandteile, insbesondere der Komponente b), die gegebenenfalls vorab in einem vorgetrockneten Lösungsmittel gelöst zum Einsatz gelangen kann, sowie gegebenenfalls der noch nicht zu Beginn eingesetzten trockenen Hilfs- und Zusatzmittel. Im allgemeinen liegt das Gewichtsverhältnis der beim erfindungsgemäßen Verfahren eingesetzten Komponente a) zu der Komponente b) bei 1:1 bis 1:30, vorzugsweise 1:2 bis 1:10.

Gewünschtenfalls können die wie beschrieben hergestellten Gemische noch mit weiterem (trockenen) Lösungsmittel überschichtet und einige Stunden stehen gelassen werden.

Nach erneutem sorgfältigen Durchmischen erhält man dann ein gebrauchsfertiges, feuchtigkeitshärtendes Einkomponenten-Beschichtungsmittel.

Bei den in den Beschichtungsmitteln vorliegenden Lösungsmitteln handelt es sich um die üblichen Lösungsmittel der Lacktechnologie, beispielsweise um Toluol, Xylol, Alkylaromaten, Ethylacetat, Butylacetat, Methoxypropylacetat, Methylethylketon, Methylisobutylketon oder um Gemische derartiger Lösungsmittel. Bei den übrigen Hilfs- und Zusatzmitteln handelt es sich die üblicherweise in Einkomponenten-Polyurethanlacken eingesetzten Hilfs- und Zusatzmittel, insbesondere metallische oder mineralische Pigmente, Füllstoffe und sonstige Hilfsmittel, wie sie beispielsweise in H. Kittel-Lehrbuch der Lacke und Beschichtungen Band III, Verlag W.A. Colomb Berlin-Schwandorf (1976) beschrieben sind.

Die beim erfindungsgemäßen Verfahren erhaltenen Beschichtungsmittel können nach allen Methoden der Beschichtungstechnologie verarbeitet werden. Sie eignen sich zur Herstellung von blasenfreien Beschichtungen einer hohen Schichtdicke auf metallischen Untergründen, auf Beton, Mauerwerk und anderen Substraten. Sie können für Grundierungen und Decklacke besonders vorteilhaft im Korrosionsschutz verwendet werden, beispielsweise zur Beschichtung von Brücken, Containern, Lösungsmittelbehältern, Stahlbauwerken, Hochspannungsmasten; für Beschichtungen im maritimen Bereich, beispielsweise von Bohrinseln, Hafenanlagen, Schleusen, Schwimmdocks und Schiffen.

Gegenüber den bislang bekannten Einkomponenten-Polyurethan-Beschichtungsmitteln zeichnen sich die erfindungsgemäßen Beschichtungsmittel durch eine verbesserte Lagerstabilität bei zumindest gleich hoher Trocknungsgeschwindigkeit und zumindest vergleichbar guten mechanischen Eigenschaften der resultierenden Lackfilme aus.

In den nachfolgenden Beispielen beziehen sich alle Prozentangaben auf Gewichtsprozente.

Beispiele

In nachfolgenden Beispielen werden folgende Ausgangskomponenten eingesetzt:

Isocyanatkomponente I [Komponente a)]

760 g eines Polyisocyanatgemischs der Diphenylmethanreihe, bestehend aus 4,2 Gew.-% 2,2'-, 36,8 Gew.-% 2,4'-, 48,0 Gew.-% 4,4'-Diisocyanatodiphenylmethan und zu 11 Gew.-% aus höherfunktionellen Polyisocyanaten, werden bei 60°C mit 240 g 2-Ethylhexanol ca. 2 h verrührt, bis der NCO-Gehalt von ca. 15,9 % unverändert bleibt. Vor der Umsetzung mit dem Alkohol betrug die NCO-Funktionalität etwa 2,07, nach der Umsetzung etwa 1,4. Man erhält eine gelblich-braune Flüssigkeit mit einer Viskosität von 620 mPas/23°C.

Isocyanatkomponente II [Komponente a)]

274 g eines Polyisocyanatgemischs der Diphenylmethanreihe, bestehend aus 3,2 Gew.-% 2,2'-, 41,0 Gew.-% 2,4'-, 40,8 Gew.-% 4,4'-Diisocyanatodiphenylmethan und zu 15 Gew.-% aus höherfunktionellen Polyisocyanaten der Diphenylmethanreihe werden mit 121 g Laurylalkohol bei 60°C unter gutem Rühren umgesetzt. Durch den Einbau des Monoalkohols sinkt die NCO-Funktionalität von vorher etwa 2,15 auf etwa 1,5. Der NCO-Gehalt liegt bei 16 %. Das gelblich-braune Produkt hat eine Viskosität von 580 mPas/25° C.

Isocyanatkomponente III [Komponente b)]

60 %ige Lösung in einem Gemisch aus gleichen Teilen Xylol und Methoxypropylacetat eines Urethangruppen aufweisenden Polyisocyanats auf Basis von 2,4-Diisocyanatotoluol, Trimethylolpropan und einem tetrafunktionellen Polyetherpolyol des Molekulargewichts 4.000, hergestellt durch Propoxylierung von Ethylendiamin. Das Gewichsverhältnis von Trimethylolpropan zu Polyetherpolyol liegt bei 1:3. Die Lösung weist einen NCO-Gehalt von 6,7 % auf.

Isocyanatkomponente IV [Komponente b)]

Lösungsmittelfreies, Urethangruppen aufweisendes Polyisocyanat auf Basis von 2,4-Diisocyanatotoluol und einem Polyether des Molekulargewichts 3.000, hergestellt durch Propoxylierung von Glycerin. Das Isocyanatgruppen aufweisende Prepolymer weist einen NCO-Gehalt von 3,2 %. und bei 23°C eine Viskosität von 8.000 mPa.s auf.

Isocyanatkomponente V [Komponente b)]

Lösungsmittelfreies, Urethangruppen aufweisendes Polyisocyanat auf Basis von (i) Roh-MDI, das zu etwa 24 % aus 2,2'- und 2,4'-Diisocyanatodiphenylmethan, zu etwa 25 % aus 4,4'-Diisocyanatodiphenylmethan und zu 51 % aus höherkernigen Polyisocyanaten der Diphenylmethanreihe besteht und (ii) einem Polyethergemisch, bestehend aus gleichen Gew.-Teilen eines tetrafunktionellen Polyetherpolyols des Molekulargewichts 4.000, hergestellt durch Propoxylierung von Ethylendiamin und eines Polypropylenglykols des Molekulargewichts 2.000. Das Gewichtsverhältnis der Komponente (i) zur Komponente (ii) liegt bei ca. 60:40. Der NCO-Gehalt des Urethangruppen aufweisenden Polyisocyanats (NCO-Prepolymer) liegt bei 16 Gew.-%, seine Viskosität bei 23°C bei 800 mPa.s.

Allgemeine Vorschrift für das erfindungsgemäße Verfahren

In einem Dispergiergefäß werden Lösungsmittel, Verlaufmittel, Rheologiehilfsmittel und die Isocyanatkomponente a) vermischt. (Die Menge an a) hat man vorher aus dem Wassergehalt aller Zusatzstoffe und Pigmente berechnet.) Dann trägt man unter langsamen Rühren Pigmente und Füllstoffe ein. Anschließend wird der Ansatz ohne Rühren ca. 30 min. bei < 18m/s Umlaufgeschwindigkeit der Dissolverscheibe dispergiert. Unter diesen Bedingungen steigt die Temperatur schnell auf 65 bis 85°C an, die Entwässerung ist nach 20 bis 30 min.

beendet. Der Ansatz wird abgekühlt und die Bindemittelkomponente b) zugegeben. Anschließend wird gegebenenfalls mit einer Restmenge Lösemittel überschichtet und z.B. über Nacht stehen gelassen. Am nächsten Tag wird durchgemischt und gegebenenfalls auf Verarbeitungsviskosität eingestellt. Das Beschichtungsmittel kann dann abgefüllt werden. Es ist verschlossen über lange Zeiten unverändert stabil.

Zum Vergleich werden analoge Beschichtungsmittel herangezogen, in denen die Hilfs- und Zusatzmittel nicht mit einer erfindungsgemäßen Komponente a) sondern mit einem handelsüblichen Trocknungsmittel (Tosylisocyanat) getrocknet worden sind. Dieses Trocknungsmittel wird jedoch lediglich in einer Menge eingesetzt, die einem Molverhältnis Tosylisocyanat:Wasser von 2:1 entspricht, da die Verwendung von höheren Mengen dieses Zusatzmittels wegen seiner hohen Reaktivität und der Möglichkeit der Bildung von Nebenprodukten nachteilig ist.

Beispiel 1

Dieses Beispiel beschreibt ein lösungsmittelarmes, erfindungsgemäßes Beschichtungsmittel und seine Verwendung zur Herstellung einer Dickschicht-Lackierung mittels einer Airless-Spritzpistole auf gestrahlten Stahlblechen der Abmessung 190 x 105 x 3 mm.

Zum Vergleich wird ein entsprechendes Beschichtungsmittel verwendet, in welchem die erfindungswesentliche Isocyanatkomponente II (455 Gew.-Teile) durch 120 Gew.-Teile Tosylisocyanat ersetzt worden ist (Mol-Verhältnis von Isocyanatgruppen des Tosylisocyanats zu vorab analytisch festgestelltem Wasser = ca. 2:1).

Zusammensetzung des erfindungsgemäßen Beschichtungsmittels:

|  | Gewichtsteile |
|---|---|
| Zusatzmittel Isocyanatkomponente II | 455 |
| ®Solvesso 100 (Alkylbenzolgemisch) | 2.276 |
| ®Acronal 700 L (Verlaufmittel, 10 %) Hersteller BASF, Ludwigshafen | 20 |
| ®Bentone 34 (Rheologiehilfsmittel, 10 %) Hersteller Kronos Titan, Leverkusen | 54 |
| ®Bayferrox 130 BM (Eisenoxidpigment) Hersteller Bayer AG, Leverkusen | 116 |
| Micro Talc A.T. 1 (Füllstoff) Hersteller Quarzmehlwerk Frechen | 1.230 |
| Blattsilicat BS 30 (Füllstoff) Hersteller: NAINTSCH Mineralwerke 8011 Graz, Österreich | 1.100 |
| Zinkstaub | 2.006 |
| Isocyanatkomponente V | 1.513 |

Die Menge der eingesetzten Isocyanatkomponente II entspricht einem Molverhältnis von Isocyanatgruppen zu Wasser von etwa 6:1.

Prüfung der Viskositätsstabilität:

Viskosität bei Lagerung im geschlossenen Gebinde:

| nach Herstellung | 269 mPas/23° C |
|---|---|
| nach 7 Tagen bei ca. 22° C | 303 mPas/23° C |
| nach 14 Tagen bei ca. 22° C | 297 mPas/23° C |
| nach 28 Tagen bei ca. 22° C | 309 mPas/23° C |
| nach 60 Tagen bei ca. 22° C | 310 mPas/23° C |

Das Beschichtungsmittel wurde dann auf Stahlplatten gespritzt und es wurde versucht, möglichst dicke Schichtdicken zu erzielen und dabei mit dem Ansatz verglichen, der mit Tosylisocyanat getrocknet wurde. Die Beurteilung erfolgte nach dem Trocknen bei 60 % rel. Feuchte bei ca. 20 - 25°C in 3 Tagen: Das zum Vergleich herangezogene Beschichtungsmittel zeigte bei einer Schichtdicke von 50 μm noch keine Blasen, bei 80 μm Schichtdicke waren kleine Blasen entstanden, ab 100 μm bildeten sich viele kleine und größere Blasen und Läufer. Der erfindungsgemäße Lack hatte bis zu einer Schichtdicke von 220 μm keine Läufer und zeigte auch bei einer noch höheren Schichtdicke keine Blasen.

Beispiel 2

Dieses Beispiel beschreibt ein inert pigmentiertes, erfindungsgemäßes, zur Herstellung von Grundierungen geeignetes Beschichtungsmittel und seine Verwendung zur Herstellung einer Grundierung. Zum Vergleich wird ein entsprechendes Beschichtungsmittel herangezogen, in welchem die erfindungswesentliche Isocyanatkomponente I (810 Gew.-Teile, entsprechend einem Molverhältnis von Isocyanatgruppen zu Wasser von ca. 5,5:1) durch 230 Gew.-Teile Tosylisocyanat ersetzt worden sind (Mol-Verhältnis der Isocyanatgruppen des Tosylisocyanats zu vorab analytisch bestimmtem Wasser in Hilfs- und Zusatzmitteln ca. 2:1). Als Substrat dienten Stahlbleche der Abmessung 190 x 105 x 3 mm. Die Applikation der Beschichtungsmittel erfolgte per Luftpistole.

Zusammensetzung des erfindungsgemäßen Beschichtungsmittels:

| | Gewichtsteile |
|---|---|
| ®Solvesso 100 | 550 |
| Isocyanatkomponente I | 810 |
| Verlaufmittel (®Acronal 700 L; 10 %ige Lösung) Hersteller BASF, Ludwigshafen | 30 |
| Rheologiehilfsmittel (®Bentone 34; 10 %ige Paste) Hersteller Kronos Titan, Leverkusen | 128 |
| Eisenoxidpigment (®Bayferrox 130 BM) Hersteller Bayer AG, Leverkusen | 908 |
| Füllstoff Magnesiumsilikat (Micro Talc A.T.1) Hersteller Norwegian Talc, Bergen, Norwegen | 1.312 |
| Füllstoff Quarzmehl (®Silbond 600 EST) Hersteller Quarzmehlwerk Frechen, Frechen | 1.197 |
| Isocyanatkomponente III | 2.895 |
| Isocyanatkomponente IV | 441 |
| ®Solvesso 100 | 315 |

Grenzviskosität nach DIN 53214 (mPas bei 23°C)

| | erfindungs- gemäß | Vergleich |
|---|---|---|
| nach 1 Tag Lagerung bei 23° C | 280 | 1.090 |
| nach 30 Tagen Lagerung bei 23° C | 300 | 1.930 |
| nach 60 Tagen Lagerung bei 23° C | 350 | 2.890 |

Die Grundierungen auf den Stahlplatten werden nach einer Aushärtungszeit von 3 Tagen Lagerung bei 22°C/60 % rel. Luftfeuchte untersucht. Geprüft werden die Unterwanderungen am Schnitt gemäß DIN 53167 (Salzspritznebeltest) sowie der Blasengrad gemäß DIN 53209.

Beurteilung nach 42 Tagen Beanspruchung

|  | erfindungs- gemäß | Vergleich |
|---|---|---|
| Schichtdicke (µm) | 95 | 95 |
| Unterwanderung (mm) | ohne | - * |
| Blasengrad | ohne | - ** |

* wegen der starken Blasenbildung kann die Unterwanderung nicht gemessen werden.

** die Fläche war zu 100 % mit Korrosionsblasen eines Durchmessers von ca. 3 mm bedeckt.

Ergebnis: Das erfindungsgemäße Beschichtungsmittel ist niedrigviskos und gut viskositätsstabil, das Vergleichsprodukt hat eine höhere Viskosität, die beim Lagern noch zusätzlich stark ansteigt.

Beschichtungsn aus dem erfindungsgemäßen Beschichtungsmittel zeigten im Salzsprühnebeltest hervorragende Beständigkeit. Das Vergleichsprodukt versagt völlig und ist für eine korrosionshemmende Grundierung gänzlich unbrauchbar.

## Patentansprüche

1. Verfahren zur Herstellung eines Beschichtungsmittels, welches ein unter dem Einfluß von Feuchtigkeit aushärtendes, aus organischen Polyisocyanaten bestehendes Bindemittel, sowie die aus der Lacktechnologie üblichen Hilfs- und Zusatzmittel enthält, dadurch gekennzeichnet, daß man zumindest die nicht völlig trockenen Hilfs- und Zusatzmittel zunächst mit einer Isocyanatkomponente a) vermischt, die eine mittlere NCO-Funktionalität von 1,05 bis 1,8 aufweist und ein Umsetzungsprodukt aus

    a1) einem Polyisocyanatgemisch, welches, bezogen auf dieses Gemisch aus, 20 bis 70 Gew.-% 2,4'-Diisocyanatodiphenylmethan, 20 bis 70 Gew.-% 4,4'- und 2,2'-Diisocyanatodiphenylmethan, sowie 5 bis 30 Gew.-% höherkernigen Polyisocyanaten der Diphenylmethanreihe mit einer NCO-Funktionalität von > 2 besteht, und

    a2) einer unterschüssigen Menge eines, gegebenenfalls Etherbrücken aufweisenden, einwertigen Alkanols mit 1 bis 26 Kohlenstoffatomen

    darstellt, und das so erhaltene Gemisch nach Beendigung der spontan ablaufenden Isocyanat/Wasser-Reaktion mit einem Isocyanatgruppen aufweisenden Umsetzungsprodukt b) mit einem Isocyanatgehalt von 2,5 bis 25 Gew.-% aus

    b1) einer Polyisocyanatkomponente, bestehend aus mindestens einem aromatischen Polyisocyanat mit einem NCO-Gehalt von 10 bis 50 Gew.-%, und

    b2) einer unterschüssigen Menge einer Polyhydroxylkomponente, bestehend aus mindestens einem Ether- und/oder Ester- und/ oder Thioether- und /oder Carbonatgruppen aufweisenden Polyol des Molekulargewichtsbereichs 500 bis 10.000 und einer Hydroxylfunktionalität von 2 bis 6, gegebenenfalls in Abmischung mit bis zu 40 Gew.-%, bezogen auf das Gesamtgewicht der Komponente b2), mindestens eines 2- bis 6-wertigen Alkohols des Molekulargewichtsbereichs 62 bis 499,

    sowie gegebenenfalls den restlichen Hilfs- und Zusatzmitteln vermischt, wobei die Mengen der Komponenten a) und b) einem Gewichtsverhältnis a):b) von 1:1 bis 1:30 entsprechen.

## Claims

1. A process for the production of a coating composition containing a moisture-curing binder consisting of organic polyisocyanates and the auxiliaries and additives typically used in paint technology, characterized in that at least those auxiliaries and additives which are not completely dry are first mixed with an isocyanate component a) which has an average NCO functionality of from 1.05 to 1.8 and which is a reaction product of

a1) a polyisocyanate mixture which, based on this mixture, consists of 20 to 70% by weight 2,4'-diisocyanatodiphenylmethane, 20 to 70% by weight 4,4'- and 2,2'-diisocyanatodiphenylmethane and 5 to 30% by weight higher polyisocyanates of the diphenylmethane series having an NCO functionality of > 2 and

a2) a less than equivalent quantity of a monohydric $C_{1-26}$ alkanol optionally containing ether bridges, and, on completion of the spontaneous isocyanate/water reaction, the mixture thus obtained is mixed with an isocyanate-containing reaction product b) - having an isocyanate content of 2.5 to 25% by weight - of

b1) a polyisocyanate component consisting of at least one aromatic polyisocyanate having an NCO content of 10 to 50% by weight and

b2) a less than equivalent quantity of a polyhydroxyl component consisting of at least one polyol containing ether and/or ester and/or thioether and/or carbonate groups and having a molecular weight in the range from 500 to 10,000 and a hydroxyl functionality of 2 to 6, optionally in admixture with up to 40% by weight, optionally in admixture with up to 40% by weight, based on the total weight of component b2), of at least one dihydric to hexahydric alcohol having a molecular weight in the range from 62 to 499,

and the remaining auxiliaries and additives, if any, the quantities of components a) and b) corresponding to a ratio by weight of a) to b) of from 1:1 to 1:30.

## Revendications

1. Procédé de production d'une composition de revêtement qui contient un liant constitué de polyisocyanates organiques, durcissant sous l'influence de l'humidité, ainsi que des substances auxiliaires et des additifs d'emploi classique dans la technologie des peintures, caractérisé en ce qu'on mélange tout d'abord au moins les substances auxiliaires et les additifs non entièrement secs avec un composant isocyanate a) qui présente une fonctionnalité NCO moyenne de 1,05 à 1,8 et qui représente un produit de réaction

a1) d'un mélange de polyisocyanates qui est constitué, par rapport à ce mélange, de 20 à 70 % en poids de 2,4'-diisocyanatodiphénylméthane, 20 à 70 % en poids de 4,4'- et/ou de 2,2'-diisocyanatodiphénylméthane, ainsi que de 5 à 30 % en poids de polyisocyanates à plus grand nombre de noyaux de la série du diphénylméthane ayant une fonctionnalité NCO supérieure à 2, et

a2) d'une quantité déficitaire d'un alcanol monovalent ayant 1 à 26 atomes de carbone, présentant éventuellement des ponts éther,

et on mélange, lorsque la réaction isocyanate/eau qui se déroule spontanément est terminée, le mélange ainsi obtenu avec un produit de réaction b) porteur de groupes isocyanate ayant une teneur en isocyanate de 2,5 à 25 % en poids, dérivé

b1) d'un composant polyisocyanate constitué d'au moins un polyisocyanate aromatique ayant une teneur en NCO de 10 à 50 % en poids, et

b2) d'une quantité déficitaire d'un composant polyhydroxylé constitué d'au moins un polyol porteur de groupes éther et/ou ester et/ou thioéther et/ou carbonate, de poids moléculaire compris dans la plage de 500 à 10 000 et de fonctionnalité hydroxyle ayant une valeur de 2 à 6, le cas échéant en mélange avec jusqu'à 40 % en poids, par rapport au poids total du composant b2), d'au moins un alcool divalent à hexavalent de poids moléculaire compris dans la plage de 62 à 499,

ainsi que le cas échéant avec les substances auxiliaires et les additifs restants, les quantités de composants a) et b) correspondant à un rapport en poids a):b) de 1:1 à 1:30.